# EUROPEAN PATENT APPLICATION

(11) **EP 4 850 993 A1**
(43) Date of publication of application: **09.12.2026**
(21) Application number: 25180847.3
(22) Date of filing: 04.06.2025
(51) Int. Cl.: B60S 1/08, H02P 3/12, H02P 7/03

(54) **WIPER DRIVING SYSTEM**

(71) Applicant: VOLVO TRUCK CORPORATION, 405 08 Göteborg (SE)
(72) Inventor: PATEL, Nimish, GREENSBORO, 27455 (US); DAS, Abhijit, HIGH POINT, 27265 (US); RIDDLE, Matthew, RINGGOLD, 24586 (US)
(74) Representative: Lavoix

(57) **Abstract**

A wiper driving system (1A) comprising a wiper motor unit (14), including a motor (140) with power terminals (140A, 140B) for connection to a power supply (22), and a first switching device (142) switching between a disconnecting state, isolating the power terminals (140A, 140B), and a shorting state, connecting the power terminals; a second switching device (16) outside the wiper motor unit (14), switching between a powering state, connecting the power terminals (140A, 140B) to the power supply (22) to power the motor (140), and a stopping state, disconnecting the power terminals, causing the motor to stop; a triggering device (162) connected to the first switching device (142), which emits a triggering signal when the motor (140) is in the stopping state; wherein the first switching device (142) switches between the states based on the triggering signal.

## Description

### TECHNICAL FIELD

The disclosure relates generally to wiper systems in vehicles. In particular aspects, the disclosure relates to a wiper driving system and a vehicle comprising said wiper driving system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A known wiper driving system comprises a wiper motor driving wipers and a wiper motor relay connecting or disconnecting the wiper motor to a power supply. To stop the wipers as close to a park position as possible, a commonly used technique is dynamic braking. The known wiper driving systems often short-circuit the wiper motor's terminals by creating a short-circuiting path going through the wiper motor relay, to perform the dynamic braking. In modern vehicles, and especially heavy-duty vehicles such as trucks, the distance between the wiper motor and the wiper motor relay is significant. Thus, the short-circuiting path in known wiper driving systems often has a significant impedance, resulting in severe voltage transients, in the power supply line to which the motor is connected, during dynamic braking.

### SUMMARY

According to a first aspect of the disclosure, the invention relates to a wiper driving system, for driving a wiper, the wiper driving system comprising:
- a wiper motor unit, comprising:
   ∘ a motor, for driving the wiper when the motor is powered, the motor comprising power terminals for powering the motor, and
   ∘ a first switching device, comprising a control input configured to control the switching of the first switching device between:
      ▪ a shorting state to functionally connect the power terminals to each other, and
      ▪ a disconnecting state to functionally disconnect the power terminals from each other;
- a second switching device, arranged outside of the wiper motor unit, configured to switch between:
   ∘ a powering state to functionally connect at least one of the power terminals to a power supply to power the motor, and
   ∘ a stopping state to functionally disconnect said at least one of the power terminals from the power supply;
- a triggering device, functionally coupled to the control input of the first switching device, configured to emit a triggering signal when the second switching device is switched to the stopping state, and
wherein the triggering signal causes the first switching device to switch from the disconnecting state to the shorting state.

The first aspect of the disclosure may seek to reduce or eliminate severe voltage transients, in the power supply line to which the motor is connected, by significantly reducing the length of the short-circuiting path and its impedance. When short-circuiting the motor's terminals by connecting them to each other, the path created goes through the first switching device, which can be arranged inside the wiper motor unit, very close to the motor. As such, the short-circuiting path does not go all the way back to the wiper motor relay, and has a much less significant impedance, essentially eliminating severe voltage transients, in the power supply line. As soon as the second switching device switches to the stopping position to disconnect the motor from the power supply, the triggering device sends the triggering signal to the control input to switch the first switching device to the shorting state to short-circuit the motor's terminals. The wiper driving system, thus performs dynamic braking to stop the motor's inertia, after being disconnected from the power supply, to stop the wipers as close to their park position as possible.

Optionally in some examples, including in at least one preferred example, the triggering device is configured not to emit the triggering signal when the second switching device is in the powering state. A technical benefit may include not constantly emitting the triggering signal to the control input which switches the first switching device to the shorting state when receiving the triggering signal.

Optionally in some examples, including in at least one preferred example, the first switching device is configured to switch to the disconnecting state when the control input does not receive the triggering signal. A technical benefit may include not maintaining the first switching device constantly in the shorting state.

Optionally in some examples, including in at least one preferred example, the triggering signal is a signal representative of a voltage emitted by the motor when the motor tends to stop upon switching of the second switching device to the stopping state. A technical benefit may include efficiently short-circuiting the motor's terminals by using the voltage emitted by the motor after the motor gets disconnected from the power supply.

Optionally in some examples, including in at least one preferred example, the triggering device is the second switching device, in that the second switching device in the stopping state, functionally connects one of the power terminals to the control input, wherein the triggering signal emitted by the triggering device is the voltage emitted by the motor when the motor tends to stop; and in the powering state, functionally disconnects said power terminal from the control input, for not emitting the triggering signal. A technical benefit may include obtaining a simpler and less bulky system, as the second switching device additionally takes the role of the triggering device, essentially avoiding the addition of another device.

Optionally in some examples, including in at least one preferred example, the wiper driving system comprises a power line, connecting one of the power terminals to the second switching device, wherein the triggering device comprises a current sensing device, sensing an electrical current flowing through the power line and configured to emit the triggering signal as a function of the sensed electrical current. A technical benefit may include making it possible for the triggering device to be arranged inside the wiper motor unit, as the triggering device is not directly associated to the second switching device, which is arranged outside of the wiper motor unit.

Optionally in some examples, including in at least one preferred example, for sensing the electrical current flowing through the power line, the current sensing device comprises a shunt resistor connected in series on the power line, and comprising a first terminal connected to the power terminal via the power line and a second terminal connected to the second switching device via the power line. A technical benefit may include introducing an electric potential difference on the power line, which can be used to detect the direction of the current.

Optionally in some examples, including in at least one preferred example, an electrical resistance of the shunt resistor is 0.01 or 0.05 ohm. A technical benefit may include not affecting the motor's functioning when the motor is powered by the power supply, as the current is negligibly diminished by the shunt resistor.

Optionally in some examples, including in at least one preferred example, the current sensing device further comprises a triggering amplifier comprising a positive input terminal and a negative input terminal connected respectively to the first terminal and the second terminal of the shunt resistor, and comprising an output terminal, wherein the triggering amplifier is configured to emit the triggering signal at the output terminal, so that the triggering signal is a function of the electrical current flowing through the power line by being a function of an electric potential difference between the first terminal and the second terminal of the shunt resistor. A technical benefit may include sending a signal to the first switching device, for it to short-circuit the motor's terminals, only when the current reverses when the motor tends to stop upon switching of the second switching device to the stopping state.

Optionally in some examples, including in at least one preferred example, the triggering amplifier is a differential amplifier, wherein a differential gain of the triggering amplifier ranges from 100 to 200. A technical benefit may include sending an amplified voltage to the first switching device that is higher than a detection threshold of the control input of the first switching device.

Optionally in some examples, including in at least one preferred example, the wiper driving system comprises a feedback amplifier comprising a positive input terminal and a negative input terminal connected respectively to the second terminal and the first terminal of the shunt resistor, and comprising a feedback amplifier output terminal, wherein the feedback amplifier is configured to emit an information signal representative of a current flowing through the motor at the feedback amplifier output terminal. A technical benefit may include monitoring the current flowing through the motor.

Optionally in some examples, including in at least one preferred example, the wiper driving system comprises an electronic control unit, connected to the second switching device and configured to control the switching of the second switching device between the powering state and the stopping state, and a feedback device, comprising a feedback device output terminal connected to the electronic control unit, wherein the feedback device is configured to emit an information signal representative of a current flowing through the motor at the feedback device output terminal. A technical benefit may include avoiding damage on the motor by disconnecting the motor from the power supply if the current exceeds a threshold.

Optionally in some examples, including in at least one preferred example, the first switching device is a transistor. A technical benefit may include allowing for a more compact and efficient circuit, as transistors have a small size.

Optionally in some examples, including in at least one preferred example, the transistor is a MOSFET, IGBT or BJT. A technical benefit may include improving the reliability of the first switching device, as these three types of transistors are reliable and capable of controlling large currents with small control signals.

Optionally in some examples, including in at least one preferred example, the second switching device is a relay. A technical benefit may include allowing for multiple options for driving the wipers through multiple positions of the relay.

Optionally in some examples, including in at least one preferred example, the wiper driving system comprises a voltage divider connecting the triggering device to the control input, wherein the voltage divider is configured so that a voltage of the triggering signal at the control input is divided compared to a voltage of the triggering signal as emitted by the triggering device. A technical benefit may include reducing the voltage emitted by the triggering device to meet the requirements of the control input of the first switching device.

Optionally in some examples, including in at least one preferred example, one of the power terminals is connected to the ground and the other power terminal is connected to the second switching device. A technical benefit may include preventing damage to the motor by electrical surges.

According to a second aspect of the disclosure, the invention relates to a vehicle comprising the wiper driving system as disclosed here-above. The second aspect of the disclosure may seek to eliminate severe voltage transients, in the power supply line to which the motor is connected, by significantly reducing the length of the short-circuiting path and its impedance, in particular for large vehicles such as trucks, in which the distance between the wiper motor and the wiper motor relay is significant.

Optionally in some examples, including in at least one preferred example, the ground is the chassis of the vehicle. A technical benefit may include simplified wiring, thus reducing material costs.

Optionally in some examples, including in at least one preferred example, the vehicle further comprises a driver cabin, a windshield arranged at the front of the driver cabin, and an engine bay arranged directly beneath the driver cabin, wherein the second switching device is arranged inside the driver cabin between the engine bay and the wiper motor unit, and the wiper motor unit is arranged inside the driver cabin between the second switching device and the windshield. A technical benefit may include protecting the second switching device from heat and vibrations generated by the motor of the wiper motor unit.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a front perspective view of a vehicle comprising a wiper driving system in accordance with a first embodiment of the invention.
**FIG. 2** is a schematic representation of an electrical circuit in the wiper driving system of figure 1.
**FIG. 3** is a block diagram of a wiper driving system's operation.
**FIG. 4** is a schematic representation of an electrical circuit in the wiper driving system according to a second embodiment of the invention.
**FIG. 5** is a schematic representation of an electrical circuit in the wiper driving system according to a third embodiment of the invention.

### DETAILED DESCRIPTION

The detailed description set forth below provides information and examples of the disclosed technology with sufficient detail to enable those skilled in the art to practice the disclosure.

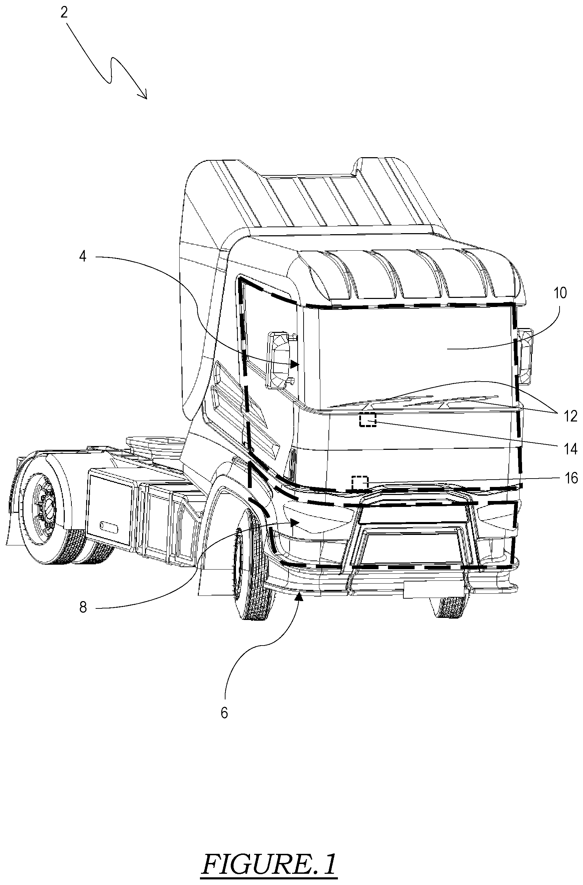

Figure 1 shows a vehicle 2 according to a first embodiment of the invention, preferably a road vehicle, comprising a driver cabin 4, a chassis 6, an engine bay 8, a windshield 10 and wipers 12 among other components. Preferably, the vehicle 2 is a heavy-duty vehicle such as a truck or a bus. The engine bay 8 is located directly beneath the driver cabin 4 and above the chassis 6. The windshield 10 is arranged at the front portion of the driver cabin 4. The wipers 12 are arranged on an external surface of the windshield 10. A wiper driving system 1A is provided for driving the wipers 12.

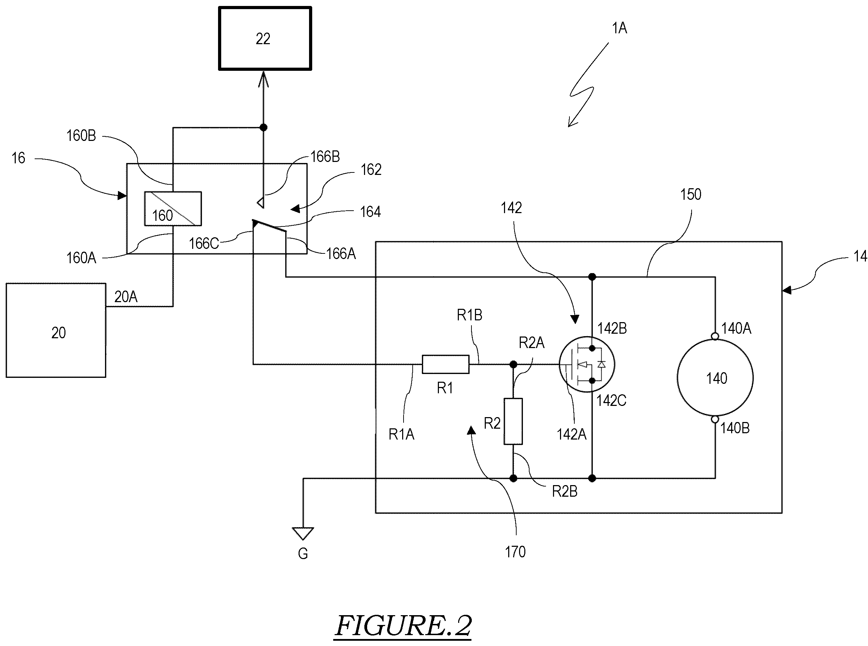

Figure 2 shows the wiper driving system 1A and a power supply 22 comprised in the vehicle 2 of Figure 1. For example, the power supply 22 is arranged in the engine bay 8. In another example, the power supply 22 may be provided away from the engine bay 8. The power supply 22 is configured to provide electrical energy to various components of the vehicle 2 and may include one or more batteries. For example, the power supply 22 provides a voltage of 24 volts DC. The wiper driving system 1A comprises a wiper motor unit 14, comprising a motor 140 and a first switching device 142. The wiper driving system 1A further comprises a second switching device 16, arranged outside of the wiper motor unit 14. In other words, the first switching device 142 is internal with respect to the wiper motor unit 14, whereas the second switching device 16 is external with respect to the wiper motor unit 14.

In one embodiment, the first switching device 142 may be disposed in electrical proximity to the motor 140 but outside the wiper motor unit 140 without comprising on the reduction/elimination of voltage transients. The second switching device 16 comprises an electromagnetic coil 160, and a contact 162. The electromagnetic coil 160 comprises a control terminal 160A and a power terminal 160B. The power terminal 160B is connected to the power supply 22 of the vehicle 2. The contact 162 comprises a mobile armature 164 and at least three terminals: a common terminal 166A, a Normally Open (NO) terminal 166B and a Normally Closed (NC) terminal 166C. The NO terminal 166B is connected to the power supply 22 of the vehicle 2. The electromagnetic coil 160 is configured to create a magnetic field, when an electric current flows through the electromagnetic coil 160. The armature 164 of the contact 162 is configured to move when a magnetic field is created by the electromagnetic coil 160. The armature 164 connects the common terminal 166A to the NO terminal 166B and does not connect the common terminal 166A to the NC terminal 166C when a magnetic field is created by the electromagnetic coil 160. The armature 164 connects the common terminal 166A to the NC terminal 166C and does not connect the common terminal 166A to the NO terminal 166B when no magnetic field is created by the electromagnetic coil 160. The second switching device 16 is configured to switch between a powering state, in which the common terminal 166A is connected to the NO terminal 166B and not to the NC terminal 166C, and a stopping state, in which the common terminal 166A is connected to the NC terminal 166C and not to the NO terminal 166B. Preferably, the second switching device 16 is a wiper motor relay and preferably, the second switching device 16 is arranged inside the driver cabin 4 between the engine bay 8 and the wiper motor unit 14, and directly above the engine bay 8 and far from the windshield 10.

Preferably, and as shown in Figure 2, the wiper driving system 1A comprises an electronic control unit 20. The electronic control unit 20 comprises at least one terminal 20A connected to the control terminal 160A of the electromagnetic coil 160 of the second switching device 16. The electronic control unit 20 is configured to switch between emitting a control signal at the terminal 20A to create an electric current flowing through the electromagnetic coil 160, and not emitting a control signal at the terminal 20A. The electronic control unit 20 is preferably arranged inside the driver cabin 4, close to the second switching device 16.

Preferably, the wiper motor unit 14 further comprises a common casing. The motor 140 and the first switching device 142 are both arranged inside the common casing of the wiper motor unit 14. The wiper motor unit 14 is preferably arranged in the driver cabin 4 between the second switching device 16 and the windshield 10, and directly under the windshield 10. This includes that the common casing, the motor 140 and the first switching device 142 are arranged in the driver cabin 4 between the second switching device 16 and the windshield 10, and directly under the windshield 10.

Further, the motor 140 is connected mechanically to the wipers 12 to drive the wipers 12 in a reciprocating movement across the windshield 10, when the motor 140 is powered by the power supply 22. The motor 140 comprises two power terminals 140A and 140B. The power terminal 140A is connected to the common terminal 166A of the contact 162 of the second switching device 16 via a power line 150 and the power terminal 140B is connected to the ground G. Preferably, the ground G is the chassis 6 of the vehicle 2. The motor 140 is configured to generate a regenerative current, at the power terminal 140A, when the power supply 22 stops powering the motor 140 and the wiper 12 continues to move, mechanically driving the motor 140.

Preferably, and as shown in Figure 2, the first switching device 142 is a transistor, and preferably, the first switching device 142 is a MOSFET, an IGBT or a BJT.
The first switching device 142 comprises a control input 142A and two terminals: an emitter terminal 142B and a collector terminal 142C. The emitter terminal 142B is connected on the power line 150, and is therefore connected to both the common terminal 166A of the contact 162 of the second switching device 16 and the power terminal 140A of the motor 140 via the power line 150. The collector terminal 142C is connected to both the power terminal 140B of the motor 140 and the ground G. The first switching device 142 is configured to switch between a shorting state and a disconnecting state. In the shorting state, the emitter terminal 142B is connected to the collector terminal 142C, therefore connecting the power terminal 140A of the motor 140 to the power terminal 140B of the motor 140. In the disconnecting state, the emitter terminal 142B is disconnected from the collector terminal 142C, therefore disconnecting the power terminal 140A of the motor 140 from the power terminal 140B of the motor 140. The control input 142A is configured to switch the first switching device 142 to the shorting state, when the control input 142A receives a triggering signal, and to the disconnecting state, when the control input 142A does not receive the triggering signal.

In the first embodiment, the second switching device 16 includes a triggering device, as explained below. The common terminal 166A of the contact 162 is connected to the power terminal 140A of the motor 140 and the NC terminal 166C is connected to the control input 142A of the first switching device 142. The contact 162 is configured to emit a triggering signal at the NC terminal 166C to the control input 142A of the first switching device 142, when the second switching device 16 is in the stopping state. The contact 162 is configured to not emit the triggering signal at the NC terminal 166C, when the second switching device 16 is in the powering state. Preferably, as shown in Figure 2, for emitting the triggering signal, the contact 162 connects the common terminal 166A to the NC terminal 166C, so that any regenerative voltage generated by the motor 140 is applied at the NC terminal 166C. Hence, in the first embodiment, the triggering signal emitted by the contact 162 is the regenerative current generated by the motor 140, when the power supply 22 stops powering the motor 140 and the wiper 12 continues to move, mechanically driving the motor 140.

Preferably, and as shown in Figure 2, the wiper driving system 1A further comprises a voltage divider 170, connecting the second switching device 16 to the control input 142A of the motor 140. The voltage divider 170 comprises a resistor R1 and a resistor R2. The resistor R1 comprises a first terminal R1A, connected to the NC terminal 166C of the contact 162, and a second terminal R1B, connected to the control input 142A of the first switching device 142. The resistor R2 comprises a first terminal R2A, connected on the line connecting the terminal R1B and the control input 142A, and a second terminal R2B, connected on the line connecting the power terminal 140B of the motor 140 to the ground G. The voltage divider 170 is configured so that a voltage of the triggering signal at the control input 142A of the first switching device 142 is divided compared to a voltage of the triggering signal as emitted by the second switching device 16 at the NC terminal 166C.

In the first embodiment of the wiper driving system 1A, the triggering device formed by the contact 162 belongs to the second switching device 16.

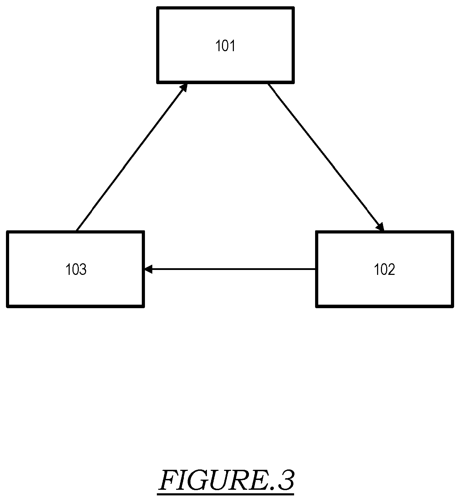

Having described the structural aspects of the wiper driving system 1A, the functional aspects are now explained in greater detail. As shown in Figure 3, the wiper driving system 1A switches between a first state 101, a second state 102 and a third state 103. In switching from the third state 103 to the first state 101, the electronic control unit 20 of the wiper driving system 1A emits a control signal at the terminal 20A, causing an electric current to flow through the electromagnetic coil 160 of the switching device 16 creating a magnetic field moving the armature 164 of the contact 162 to connect the common terminal 166A to the NO terminal 166B, thereby switching the second switching device 16 to the powering state. The power supply 22 is connected to the power terminal 140A of the motor 140 via the connection between the common terminal 166A and the NO terminal 166B of the contact 162 of the second switching device 16. An electric current flows from the power supply 22 and through the motor 140. The motor 140 is therefore powered by the power supply 22 and drives in motion the wipers 12 of the vehicle 2. As the second switching device 16 is in the stopping state, the second switching device 16 does not emit the triggering signal. As the control input 142A of the first switching device 142 does not receive the triggering signal, the first switching device 142 is in the disconnecting state.

In the first state 101, the second switching device 16 remains in the powering state, as an electric current flows through the electromagnetic coil 160 creating a magnetic field keeping the armature 164 in position to connect the common terminal 166A to the NO terminal 166B, the second switching device therefore maintains the power supply 22 and the motor 140 connected. The first switching device 142 remains in the disconnecting state, as the second switching device 16 does not emit the triggering signal.

In switching from the first state 101 to the second state 102, the electronic control unit 20 of the wiper driving system 1A stops emitting a control signal at the terminal 20A. The electric current stops flowing through the electromagnetic coil 160 of the switching device 16 and no magnetic field is created in the switching device 16. The armature 164 disconnects the common terminal 166A from the NO terminal 166B and connects the common terminal 166A to the NC terminal 166C, therefore switching the second switching device 16 to the stopping state. The power supply 22 is disconnected from the motor 140 via the disconnection between the common terminal 166A and the NO terminal 166B. The power supply 22 stops powering the motor 140 and the motor 140 generates the regenerative current at the power terminal 140A. As the second switching device 16 is in the stopping state, the second switching device 16 emits the triggering signal, which is the regenerative current, to the control input 142A. The control input 142A, upon reception of the regenerative current, switches the first switching device 142 to the shorting state. The emitter terminal 142B of the first switching device 142 is connected to the collector terminal 142C, to connect the power terminal 140A of the motor 140 to the power terminal 140B of the motor 140, therefore creating a short-circuiting path between the power terminal 140A and 140B of the motor 140. This short-circuiting stops the motion of the motor 140, which in turn stops the motion of the wipers 12.

In the second state 102, the second switching device 16 remains in the stopping state, the common terminal 166A is connected to the NC terminal 166C. The motor 140 generates the regenerative current at the power terminal 140A. The first switching device 142 remains in the shorting state, as the triggering signal is received by the control input 142A, as the power terminal 140A is connected to the control input 142A via the connection between the common terminal 166A and the NC terminal 166C, the triggering signal being the regenerative current generated by the motor 140. The power terminal 140A and the power terminal 140B of the motor 140 remain connected.

In switching from the second state 102 to the third state 103, the power supply 22 is not powering the motor 140 and the motor 140 stops generating the regenerative current when the wipers 12 stop moving. The second switching device 16 remains in the stopping state. As the motor 140 does not generate a regenerative current, the second switching device 16 does not emit the triggering signal to the control input 142A of the first switching device 142. The control input 142A, not receiving the triggering signal, switches the first switching device 142 to the disconnecting state. In the third state 103, the second switching device 16 remains in the stopping state and the first switching device 142 remains in the disconnecting state.

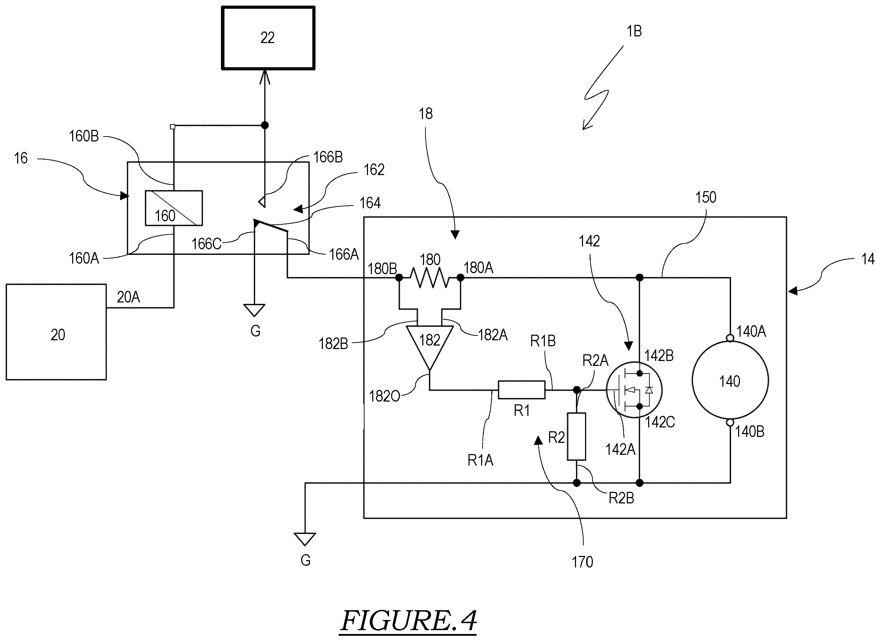

Figure 4 shows a wiper driving system 1B according to a second embodiment and a power supply 22. The second embodiment is identical to the first embodiment except for the features described hereafter.

In the second embodiment, the NC terminal 166C of the contact 162 of the second switching device 16 is connected to the ground G and rest of the electrical connections of the second switching device 16 are similar to that of the first embodiment..

In the second embodiment, the wiper driving system 1B comprises a triggering device 18 separate from the second switching device 16. The triggering device 18 is a current sensing device configured to sense an electrical current flowing through the power line 150 and to emit the triggering signal as a function of the sensed electrical current. The triggering device 18 comprises a shunt resistor 180 and a triggering amplifier 182.

The shunt resistor 180 is connected in series on the power line 150. The shunt resistor 180 comprises a first terminal 180A and a second terminal 180B. The first terminal 180A is connected to the power terminal 140A of the motor 140 via the power line 150 and the second terminal 180B is connected to the common terminal 166A of the contact 162 of the second switching device 16 via the power line 150. The shunt resistor 180 is configured to sense the electrical current flowing through the power line 150. Preferably, the shunt resistor 180 has an electrical resistance of 0.01 or 0.05 ohm.

The triggering amplifier 182 comprises a positive input terminal 182A, a negative input terminal 182B and an output terminal 182O. The positive input terminal 182A is connected to the first terminal 180A of the shunt resistor 180 and the negative input terminal 182B is connected to the second terminal 180B of the shunt resistor 180. The output terminal 182O is connected to the control input 142A of the first switching device 142 via the voltage divider. The triggering amplifier is configured to emit the triggering signal at the output terminal 182O, so that the triggering signal is a function of the electrical current flowing through the power line 150 by being a function of the electric potential difference between the first terminal 180A and the second terminal 180B of the shunt resistor 180. As the positive input terminal 182A is connected to the first terminal 180A which is connected to the second switching device 16 and the negative input terminal is connected to the second terminal 180B which is connected to the motor 140, the triggering amplifier is configured not to emit the triggering signal when the motor 140 is powered by the power supply 22, and the triggering amplifier is configured to emit the triggering signal when the motor 140 generates the regenerative current when the power supply 22 stops powering the motor 140. Preferably, the triggering amplifier is a differential amplifier with a differential gain ranging from 100 to 200.

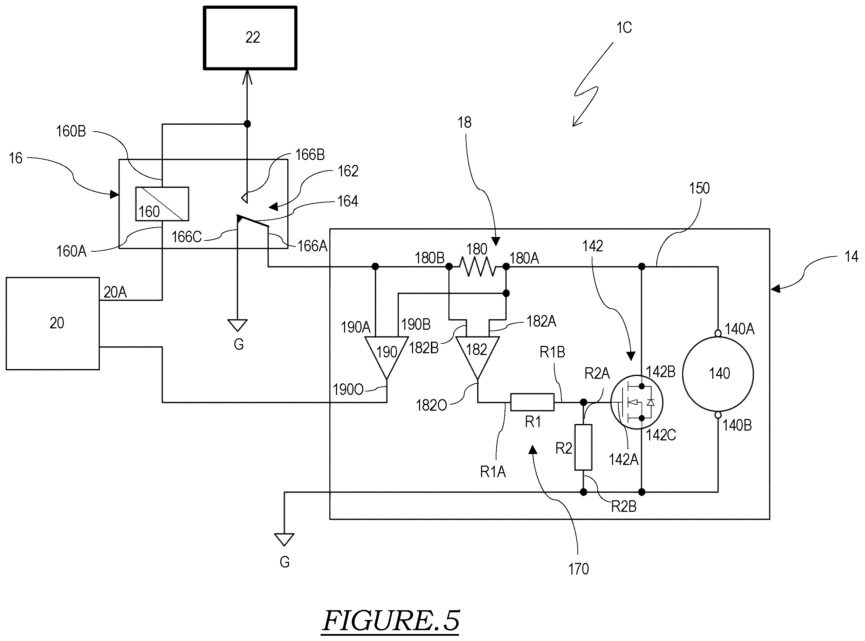

Figure 5 shows a wiper driving system 1C according to a third embodiment and a power supply 22. The third embodiment is identical to the second embodiment except for the features described hereafter.

In the third embodiment, the wiper driving system 1C further comprises a feedback amplifier 190. The feedback amplifier 190 comprises a positive input terminal 190A, a negative input terminal 190B and a feedback amplifier output terminal 190O. The positive input terminal 190A is connected to the second terminal 180B of the shunt resistor 180 and the negative input terminal 190B is connected to the first terminal 180A of the shunt resistor 180. The feedback amplifier output terminal 190O is connected to the electronic control unit 20 of the vehicle 2. The feedback amplifier 190 is configured to emit an information signal representative of a current flowing through the motor at the feedback amplifier output terminal 190O, when the motor 140 is powered by the power supply 22. The feedback amplifier 190 is configured not to emit the information signal, when the motor 140 generates the regenerative current when the power supply 22 stops powering the motor 140.

In the second and third embodiments of the wiper driving system 1B, 1C, the second switching device 16 and the triggering device 18 are implemented as separate components.

Example 1: A wiper driving system 1A, 1B, 1C, for driving a wiper 12, the wiper driving system 1A, 1B, 1C comprising:
- a wiper motor unit 14, comprising:
   - a motor 140, for driving the wiper 12 when the motor 140 is powered, the motor 140 comprising power terminals 140A and 140B for powering the motor 140, and
   - a first switching device 142, comprising a control input 142A configured to control the switching of the first switching device 142 between:
      ▪ a shorting state to functionally connect the power terminals 140A and 140B to each other, and
      ▪ a disconnecting state to functionally disconnect the power terminals 140A and 140B from each other;
- a second switching device 16, arranged outside of the wiper motor unit 14, configured to switch between:
   - a powering state to functionally connect at least one of the power terminals 140A to a power supply 22 to power the motor 140, and
   - a stopping state to functionally disconnect said at least one of the power terminals 140A from the power supply 22;
- a triggering device 162, 18, functionally coupled to the control input 142A of the first switching device, configured to emit a triggering signal when the second switching device 16 is switched to the stopping state, and
wherein the triggering signal causes the first switching device 142 to switch from the disconnecting state to the shorting state.

Example 2: The wiper driving system 1A, 1B, 1C according to example 1, wherein the triggering device 162, 18 is configured not to emit the triggering signal when the second switching device 16 is in the powering state.

Example 3: The wiper driving system 1A, 1B, 1C according to examples 1 or 2, wherein the first switching device 142 is configured to switch to the disconnecting state when the control input 142A does not receive the triggering signal.

Example 4: The wiper driving system 1A, 1B, 1C according to examples 1 to 3, wherein the triggering signal is a signal representative of a voltage emitted by the motor 140 when the motor 140 tends to stop upon switching of the second switching device 16 to the stopping state.

Example 5: The wiper driving system 1A according to example 4, wherein the triggering device 162 belongs to the second switching device 16, and wherein:
- in the stopping state, the second switching device functionally connects one of the power terminals 140A to the control input 142A, wherein the triggering signal emitted by the triggering device 162 is the voltage emitted by the motor 140 when the motor 140 tends to stop; and
- in the powering state, the second switching device functionally disconnects said power terminal 140A from the control input 142A, for not emitting the triggering signal.

Example 6: The wiper driving system 1B, 1C according to example 4, wherein the wiper driving system 1 comprises a power line 150, connecting one of the power terminals 140A to the second switching device 16, wherein the triggering device 18 comprises a current sensing device, sensing an electrical current flowing through the power line 150 and configured to emit the triggering signal as a function of the sensed electrical current.

Example 7: The wiper driving system 1B, 1C according to example 6, wherein, for sensing the electrical current flowing through the power line 150, the current sensing device comprises a shunt resistor 180:
- connected in series on the power line 150, and
- comprising a first terminal 180A connected to the power terminal 140A via the power line 150 and a second terminal 180B connected to the second switching device 16 via the power line 150.

Example 8: The wiper driving system 1B, 1C according to example 7, wherein an electrical resistance of the shunt resistor 180 is 0.01 or 0.05 ohm.

Example 9: The wiper driving system 1B, 1C according to examples 7 or 8, wherein the current sensing device further comprises a triggering amplifier 182:
- comprising a positive input terminal 182A and a negative input terminal 182B connected respectively to the first terminal 180A and the second terminal 180B of the shunt resistor 180, and
- comprising an output terminal 182O, wherein the triggering amplifier 182 is configured to emit the triggering signal at the output terminal 182O, so that the triggering signal is a function of the electrical current flowing through the power line 150 by being a function of an electric potential difference between the first terminal 180A and the second terminal 180B of the shunt resistor 180.

Example 10: The wiper driving system 1B, 1C according to example 9, wherein the triggering amplifier 182 is a differential amplifier, wherein a differential gain of the triggering amplifier 182 ranges from 100 to 200.

Example 11: The wiper driving system 1C according to examples 7 to 10, wherein the wiper driving system 1 comprises a feedback amplifier 190:
- comprising a positive input terminal 190A and a negative input terminal 190B connected respectively to the second terminal 180B and the first terminal 180A of the shunt resistor 180, and
- comprising a feedback amplifier output terminal 190O, wherein the feedback amplifier 190 is configured to emit an information signal representative of a current flowing through the motor 140 at the feedback amplifier output terminal 190O.

Example 12: The wiper driving system 1A, 1B, 1C according to examples 1 to 11, wherein the wiper driving system 1 comprises:
- an electronic control unit 20, connected to the second switching device 16 and configured to control the switching of the second switching device 16 between the powering state and the stopping state, and
- a feedback device, comprising a feedback device output terminal connected to the electronic control unit 20, wherein the feedback device is configured to emit an information signal representative of a current flowing through the motor 140 at the feedback device output terminal.

Example 13: The wiper driving system 1A, 1B, 1C according to examples 1 to 12, wherein the first switching device 142 is a transistor.

Example 14: The wiper driving system 1A, 1B, 1C according to examples 1 to 13, wherein the transistor is a MOSFET, IGBT or BJT.

Example 15: The wiper driving system 1A, 1B, 1C according to examples 1 to 14, wherein the second switching device 16 is a relay.

Example 16: The wiper driving system 1A, 1B, 1C according to examples 1 to 15, wherein the wiper driving system 1 comprises a voltage divider 170 connecting the triggering device 18 to the control input 142A, wherein the voltage divider 170 is configured so that a voltage of the triggering signal at the control input 142A is divided compared to a voltage of the triggering signal as emitted by the triggering device 18.

Example 17: The wiper driving system 1A, 1B, 1C according to examples 1 to 16, wherein one of the power terminals 140B is connected to the ground G and the other power terminal 140A is connected to the second switching device 16.

Example 18: A vehicle 2, comprising the wiper driving system 1A, 1B, 1C according to examples 1 to 17.

Example 19: The vehicle 2 of example 18, wherein the wiper driving system 1A, 1B, 1C is according to example 17, wherein the ground G is the chassis 6 of the vehicle 2.

Example 20: The vehicle 2 of examples 18 or 19, further comprising:
- a driver cabin 4,
- a windshield 10 arranged at the front of the driver cabin 4, and
- an engine bay 8 arranged directly beneath the driver cabin 4,
wherein the second switching device 16 is arranged inside the driver cabin 4 between the engine bay 8 and the wiper motor unit 14, and the wiper motor unit 14 is arranged inside the driver cabin 4 between the second switching device 16 and the windshield 10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wiper driving system (1A; 1B; 1C), for driving a wiper (12), the wiper driving system comprising:
- a wiper motor unit (14), comprising:
- a motor (140), for driving the wiper when the motor is powered, the motor comprising power terminals (140A, 140B) for powering the motor, and
- a first switching device (142), comprising a control input (142A) configured to control the switching of the first switching device between:
▪ a shorting state to functionally connect the power terminals to each other, and
▪ a disconnecting state to functionally disconnect the power terminals from each other;
- a second switching device (16), arranged outside of the wiper motor unit, configured to switch between:
- a powering state to functionally connect at least one of the power terminals (140A) to a power supply (22) to power the motor, and
- a stopping state to functionally disconnect said at least one of the power terminals from the power supply;
- a triggering device (162; 18), functionally coupled to the control input of the first switching device, configured to emit a triggering signal when the second switching device is switched to the stopping state, and
wherein the triggering signal causes the first switching device to switch from the disconnecting state to the shorting state.

2. The wiper driving system (1A; 1B; 1C) of claim 1, wherein the triggering device (162; 18) is configured not to emit the triggering signal when the second switching device (16) is in the powering state.

3. The wiper driving system (1A; 1B; 1C) of any of claims 1 or 2, wherein the first switching device (142) is configured to switch to the disconnecting state when the control input (142A) does not receive the triggering signal.

4. The wiper driving system (1A; 1B; 1C) of any of claims 1-3, wherein the triggering signal is a signal representative of a voltage emitted by the motor (140) when the motor tends to stop upon switching of the second switching device (16) to the stopping state.

5. The wiper driving system (1A) of claim 4, wherein the triggering device (162) belongs to the second switching device (16), and wherein:
- in the stopping state, the second switching device functionally connects one of the power terminals (140A) to the control input (142A), the triggering signal emitted by the triggering device (162) being the voltage emitted by the motor (140) when the motor tends to stop; and
- in the powering state, the second switching device functionally disconnects said power terminal from the control input, for not emitting the triggering signal.

6. The wiper driving system (1B; 1C) of claim 4, wherein the wiper driving system comprises a power line (150), connecting one of the power terminals (140A) to the second switching device (16), wherein the triggering device (18) comprises a current sensing device, sensing an electrical current flowing through the power line and configured to emit the triggering signal as a function of the sensed electrical current.

7. The wiper driving system (1B; 1C) of claim 6, wherein, for sensing the electrical current flowing through the power line (150), the current sensing device comprises a shunt resistor (180):
- connected in series on the power line, and
- comprising a first terminal (180A) connected to the power terminal (140A) via the power line and a second terminal (180B) connected to the second switching device (16) via the power line.

8. The wiper driving system (1B; 1C) of any of claims 6 or 7, wherein the current sensing device further comprises a triggering amplifier (182):
- comprising a positive input terminal (182A) and a negative input terminal (182B) connected respectively to the first terminal (180A) and the second terminal (180B) of the shunt resistor (180), and
- comprising an output terminal (182O), wherein the triggering amplifier is configured to emit the triggering signal at the output terminal (182O), so that the triggering signal is a function of the electrical current flowing through the power line (150) by being a function of an electric potential difference between the first terminal and the second terminal of the shunt resistor.

9. The wiper driving system (1C) of any of claims 7 or 8, wherein the wiper driving system comprises a feedback amplifier (190):
- comprising a positive input terminal (190A) and a negative input terminal (190B) connected respectively to the second terminal (180B) and the first terminal (180A) of the shunt resistor (180), and
- comprising a feedback amplifier output terminal (190O), wherein the feedback amplifier is configured to emit an information signal representative of a current flowing through the motor (140) at the feedback amplifier output terminal.

10. The wiper driving system (1A; 1B; 1C) of any of claims 1-9, wherein the wiper driving system comprises:
- an electronic control unit (20), connected to the second switching device (16) and configured to control the switching of the second switching device between the powering state and the stopping state, and
- a feedback device, comprising a feedback device output terminal connected to the electronic control unit, wherein the feedback device is configured to emit an information signal representative of a current flowing through the motor at the feedback device output terminal.

11. The wiper driving system (1A; 1B; 1C) of any of claims 1-10, wherein the wiper driving system comprises a voltage divider (170) connecting the triggering device (16; 18) to the control input (142A), wherein the voltage divider is configured so that a voltage of the triggering signal at the control input is divided compared to a voltage of the triggering signal as emitted by the triggering device.

12. The wiper driving system (1A; 1B; 1C) of any of claims 1-11, wherein one of the power terminals (140B) is connected to the ground and the other power terminal (140A) is connected to the second switching device (16).

13. A vehicle (2) comprising the wiper driving system (1A; 1B; 1C) according to any of claims 1 to 12.

14. The vehicle (2) of claim 13, wherein the wiper driving system (1A; 1B; 1C) is according to claim 12, wherein the ground (G) is the chassis (6) of the vehicle.

15. The vehicle (2) of any of claims 13 or 14, further comprising:
- a driver cabin (4),
- a windshield (10) arranged at the front of the driver cabin, and
- an engine bay (8) arranged directly beneath the driver cabin,
wherein the second switching device (16) is arranged inside the driver cabin (4) between the engine bay (8) and the wiper motor unit (14), and the wiper motor unit (14) is arranged inside the driver cabin (4) between the second switching device (16) and the windshield (10).
